(19) Europäisches Patentamt
European Patent Office
Office européen des brevets

(11) **EP 4 109 342 A1**

(12) **EUROPEAN PATENT APPLICATION**

(43) Date of publication:
**28.12.2022 Bulletin 2022/52**

(21) Application number: **21181333.2**

(22) Date of filing: **24.06.2021**

(51) International Patent Classification (IPC):
*G06N 3/04* (2006.01)          *G06N 3/08* (2006.01)
*G06N 20/00* (2019.01)

(52) Cooperative Patent Classification (CPC):
**G06N 3/04; G06N 3/08; G06N 20/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA**
  **Toyota-shi, Aichi-ken 471-8571 (JP)**
• **The Chancellor, Masters and Scholars of the**
  **University of Cambridge**
  **Cambridge CB2 1TN (GB)**

(72) Inventors:
• **AL JUNDI, Rahaf**
  **1140 BRUSSELS (BE)**
• **OLMEDA REINO, Daniel**
  **1140 BRUSSELS (BE)**
• **CHUMERIN, Nikolay**
  **1140 BRUSSELS (BE)**
• **TURNER, Richard**
  **CAMBRIDGE, CB22 5JL (GB)**

(74) Representative: **Cabinet Beau de Loménie
158, rue de l'Université
75340 Paris Cedex 07 (FR)**

(54) **NOVELTY DETECTION METHOD FOR A NEURAL NETWORK MODEL**

(57)     A computer-implemented method (12) for detecting, for a neural network model configured to classify input signals into a plurality of known output classes, whether an input signal (x) belongs to a new output class, the new output class being an output class which does not belong to said plurality of known output classes, the method comprising:

- computing (22) a feature vector ($\Phi(x)$) of the input signal with the neural network model;

- calculating (24, 30) a score (B) based on respective similarities between said feature vector ($\Phi(x)$) and respective prototypes of all the known output classes of the neural network model;

- determining (32) that the input signal belongs to a new output class if the score (B) meets a predetermined criterion.

FIG. 1

**Description**

TECHNICAL FIELD

The present disclosure relates to the field of machine learning, and more particularly to a method for detecting, for a neural network model configured to classify input signals into a plurality of known output classes, whether an input signal belongs to a new output class.

TECHNOLOGICAL BACKGROUND

Neural network models configured to perform classification tasks have been known, for instance to recognize objects or people in images. That is, the neutral network model receives an input signal, or sample, and classifies this input, i.e. determines to which category, or class, this input signal belongs. The possible output classes may be learnt during a training phase, based on annotated data. However, the amount of annotated data is necessarily limited. In addition, even if the annotated data were intended to cover all existing objects, for instance, our world is constantly evolving and new classes of objects always appear. Thus, it may happen that an input signal given to the neural model network does not belong to any of the output classes learned by the model. This generally results in an erroneous detection, since the model will nevertheless try to link that input signal to one of the output classes that it has learned.

Novelty detection methods, also known as out-of-distribution or anomaly detection methods, deal with the problem of detecting input data that are unfamiliar to a given model and out of its knowledge scope, therefore avoiding misleading predictions and providing the model with a « no » option.

In this field, there is a constant need of improvement in order to increase reliability of the neural network model.

SUMMARY

In this respect, the present disclosure relates to a computer-implemented method for detecting, for a neural network model configured to classify input signals into a plurality of known output classes, whether an input signal belongs to a new output class, the new output class being an output class which does not belong to said plurality of known output classes, the method comprising:

- computing a feature vector of the input signal with the neural network model;
- calculating a score based on respective similarities between said feature vector and respective prototypes of all the known output classes of the neural network model;
- determining that the input signal belongs to a new output class if the score meets a predetermined criterion.

A neural network model (or merely "model" hereinafter) may comprise an artificial neural network. An artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and bias. The weights can be modulated according to the learning of the ANN. In principle, learning comprises providing the ANN with a set of situations in which inputs (here, the input signals) and outputs (here, the output classes) are known. During the learning process, the ANN adapts its synaptic weights and biases to conform to the learned situations, possibly with some tolerance. The weights and biases, once determined at the end of the learning phase, may then remain constant or not during the exploitation or deployment phase, as will be discussed below.

The input signal may be acquired by a sensor, measured, detected or otherwise obtained. An arbitrary amount of time may elapse between the acquisition of the input signal and its being provided as an input to the neural network model. In the meantime, the input signal may be stored in a memory. As detailed later, for instance, the input signal may be an image, e.g. two-dimensional or three-dimensional, a video, an audio track, an electrical input, etc.

Since there is a plurality of known output classes, the model must have undergone some kind of training or predetermination in order to be able to classify input signals into such classes. In contrast, the new output class does not belong to the plurality of known output classes, i.e. the new output class is an output class which has not been seen by the model during previous training or the like. It may be determined that the input signal belongs to a new output class (this new output class being, by definition, unknown to the model) when the method determines that the input sample does not belong to any of the known output classes.

The feature vector is a representation of part or all of the input signal that is to be classified by the neural network model. Computing the feature vector is a normal operation of the neural network model when classifying an input. The feature vector is not the final output of the model but an intermediate transformation of the input signal.

A prototype of an output class is a representation of a typical specimen which belongs to that output class. Said specimen may be built by the neural network model during training or may be one of the training input signals which is regarded as representative of the other input signals of that output class. Thus, assessing the similarity between the feature vector and the prototype gives an idea of how close to the prototype the feature vector is, hence, how likely the feature vector is to belong to the corresponding output class. The prototype itself may be a vector. The prototype may have the same dimensionality as the feature vector. For instance, the prototype may be a vector of the last layer class weights of the neural network model for the related output class, as the inventors have noted that the weights of the last layer converge to the mean of the input signals in each class.

The similarities are evaluated between the feature vector and the prototypes of all the known output classes, in order to determine whether the feature vector is likely to belong to any one of the known classes. Each similarity may be represented by a scalar, etc. The similarities may be bounded, i.e. may range between a first value when the feature vector and the prototype are the same (at least in some aspects), and a second value when the feature vector and the prototype are opposed (at least in some aspects). The first and second values may be the same for all the similarities in order to make the similarities comparable with one another; in other words, the similarities may be normalized.

The score may be calculated as a mathematical operation of the respective similarities. The score may be a scalar. The predetermined criterion for assessing whether the input signal belongs to a new output class may be determined depending on how the score itself is calculated. For instance, if the score is high when the feature vector is similar to a prototype, the predetermined criterion may be that the score is less than a predetermined value: in this example, the score being less than a predetermined value means that the feature vector is similar to no prototype, and thus that the feature vector belongs to a new output class.

Due to the score being calculated based on respective similarities between the feature vector and respective prototypes of all the known output classes, the present method (also referred to as the detection method) differs from methods in which a new output class is detected based only on the probability that the input signal belongs to the most probable predicted class. Such method are not reliable enough, as the most probable predicted class is not a robust prediction (i.e., it is not discriminative enough) when the input signal does in fact not belong to any of the known classes. In contrast, the present method leverages the respective similarities between the feature vector of the input signal and the learned prototypes of the different output classes, which enables to better take all the known classes into account, and therefore to provide a more reliable result. Moreover, calculating the score based on the feature vector and the prototypes enables to get information from the norm and direction of the respective vectors, and not only from a projection thereof such as a probability: this is more discriminative and further contributes to the reliability of the method.

Having a more reliable detection method for detecting new classes results in enhancing the accuracy of the neural network model.

Besides, thanks to these enhancements, the initial training of the model can be lightened, since the neural network model is itself capable of appropriately discriminating between input signals which belong to one of the known output classes and input signals which do not. It is therefore not necessary to train the model on every possible class to detect, although later annotation of the detected new output classes may still be required.

In addition, the method does not require storing signals from previous training steps in order to detect a new output class. The method is therefore relatively light to implement, in particular on on-board systems.

Optionally, the score comprises a weighted sum of the similarities. The weights may all have the same signs (e.g. positive or negative). Thus, the score is easy to calculate.

Optionally, the score comprises a scalar score calculated as $\Phi^*(x).z$, where $x$ is the input signal, $\Phi^*(x)$ is the normalized feature vector and $z = p_x \theta^*$, with $p_x$ being an estimated class probability vector defined as $p_x = [p_x^1, p_x^2, ..., p_x^k]$

$$p_x^i = \frac{e^{\Phi(x).\theta_i}}{\Sigma_j e^{\Phi(x).\theta_j}},$$

and wherein $k$ is the number of known output classes, $\theta_i$ is the prototype of known output class $i$ and the $i$-th column of a prototype matrix $\theta$, and $\theta^*$ is the normalized prototype matrix.

In the above, $\Phi^*(x).z$ means the dot product of $\Phi^*(x)$ and $z$, and an asterisk means that the vector or matrix is normalized. For instance, $\Phi(x)$ is the feature vector and $\Phi^*(x)$ is the normalized feature vector. The applicable norm may be appropriately chosen by the skilled person based on his requirement, provided that the same norm is used consistently in the calculations. For instance, the norm may be L1, L2, L-infinity, etc.

In some embodiments, the score may be equal to said scalar score, also referred to hereinafter as the first scalar score.

Optionally, the neural network model is a combination of a feature extractor model and a classification model, wherein the feature vector is computed as an output of the feature extractor with the input signal as an input. That is, the feature vector is an output of the last layer of the neural network model before classification. In the neural network model, the feature vector is the input of the classification model.

Optionally, the classification model is linear. Because the classification model is linear, it is easy to calculate a score based on the prototypes. The classification model may include the aforementioned prototype matrix $\theta$.

Optionally, the classification model has no bias term in a last layer thereof. In general, biases and weights are learnt based on training data. However, a bias term is a term having a fixed contribution to an output, i.e. a contribution which is independent from the particular input given to the classification model, e.g. as opposed to a weight. For instance, a bias may be an offset, whereas a weight may be a factor multiplying the input. Since the classification model has no bias term in a last layer thereof, said last layer may be seen as a matrix, e.g. the above prototype matrix $\theta$. That is, the weights of each output class can be treated as a vector, which makes generation of the prototypes easier.

Optionally, the method further comprises calculating an updated feature vector by applying a perturbation to the feature vector, and estimating a difference between a similarity of the updated feature vector to a prototype of a predicted known output class for the feature vector and a similarity of the updated feature vector to a prototype of another one of the known output classes, wherein the score is further based on said difference. The idea of applying a perturbation to the feature vector is to see whether there is a strong correlation between the feature vector and the predicted known output class (i.e. the known output class to which the input signal is predicted to belong by the neural network model, more simply referred to as the "predicted class"), in which case a perturbation would have little influence on that correlation, or whether, to the contrary, the perturbation makes the updated feature vector more similar to another one of the known output classes. By definition indeed, input signals belonging to a new output class do not belong to any one of the known output classes, and therefore should move easily from one class to another when perturbed. Therefore, taking said difference into account in the score brings further robustness to the detection method.

Optionally, the method further comprises identifying, as the other one of the known output classes, at least one closest output class to the feature vector other than the predicted known output class.

The neural network model is configured to determine not only the closest output class to the feature vector, i.e. the predicted class, but also at least one closest output class to the feature vector other than the predicted class. In other words, the predicted class is closer to the feature vector than the at least one closest output class other the predicted class. In turn, the at least one closest output class other than the predicted output class is closer to the feature vector than the remaining output classes. Yet in other words, the predicted class is the best prediction of the neural network model for a given input signal, and the at least one closest output class is the second best, third best, ..., i-th best prediction(s). Considering closest output classes makes the method leverage more relevant information, and therefore provide a more significant and thus more reliable score.

Optionally, said perturbation corresponds to a gradient, with respect to the feature vector, of a loss function of the neural network model given said other one of the known output classes as a label.

In these embodiments, the perturbation, corresponding to (i.e. calculated based on, e.g. proportional or equal to) said gradient, measures how easily the feature vector can move from the predicted class to another output class. Thus, the detection method evaluates the robustness of the predicted output class not only in a random direction but with respect to the at least one other output class, which is more likely to give significant results. Therefore, the reliability of the detection method is improved.

Optionally, the similarity is estimated based on an angle between two vectors. For instance, the similarity of the updated feature vector to a prototype of a predicted known output class for the feature vector is estimated based on an angle between the updated feature vector and the prototype of a predicted known output class for the feature vector. Likewise, a similarity of the updated feature vector to a prototype of another one of the known output classes is estimated based on an angle between the updated feature vector and the prototype of another one of the known output classes.

For instance, the similarity may be measured as, or proportional to, the cosine of the angle between the two vectors. Thus, the similarity equals to 1 when the vectors are aligned, and equals to -1 when the vector are opposed. The similarity is zero when the vectors are orthogonal. Other functions, having these properties or not, are envisaged. For instance, the similarity may be an even and/or bounded function of the angle. The similarity may be a (strictly) decreasing function of the angle over the range [0°, 180°].

Optionally, the method comprises estimating a plurality of said differences, wherein the score is based on an average of said plurality of differences. Each of said difference may rely on a different perturbation, based e.g. on a gradient of a different closest class, as set out before. The average may be an arithmetic average, a geometric average, a weighted average, etc.

Said average may be estimated as a second scalar score. The score may comprise a sum of the first scalar score and the second scalar score.

Optionally, the input signal comprises an image and the plurality of known output classes corresponds to a plurality of items and/or actions and/or people to be detected in the image, respectively. That is, the neural network model may be configured to identify an item and/or an action and/or a person in an image, and classify that image based on the identified item and/or action and/or person. The image may be 2D or 3D. The input signal may comprise a plurality of images, e.g. a video.

In other applications, the input signal may comprise an object extracted from an image (e.g. a human pose, for instance of a diagrammatic skeleton).

The neural network model may be used in a driving system, e.g. an autonomous driving system or an assisted driving system. For safety reasons, it is essential to detect new situations (raising from detected images, detected sounds, detecting sensors signals, etc.) and not to wrongly classify them. For instance, in case a new situation is identified, the vehicle control may be given back to the driver, instead of performing an inappropriate automatic control of the vehicle. New output classes may be annotated after their detection, as described below, thus enabling the driving system to adapt to new scenarios.

The present disclosure is further directed to a computer-implemented continual training method for a neural network model configured to classify input signals into a plurality of known output classes, the method comprising:

- providing an input signal to the neural network model;
- detecting, by the above-described method, whether the input signal belongs to a new output class for the neural network model;
- if the input signal belongs to a new output class, updating the neural network model to include the new output class in the plurality of known output classes, and training the neural network model on the input signal as an annotated input corresponding to the new output class.

The computer-implemented continual training method (hereinafter "the training method") may be implemented with all steps altogether, or with an arbitrary amount of time between the new class detection and the neural network model update: for instance, input signals corresponding to new output classes may be detected during a deployment phase of the neural network model. These input signals may be stored in a memory to be annotated in a later phase, e.g. after the deployment phase. After annotation, the neural network model may be updated to include at least one additional known output class, comprising one or more of the detected new output classes, and trained with the annotated input signals for the respective output classes. From then on, the newly learned output classes will be taken into account as known output classes, e.g. when calculating the aforementioned score.

Therefore, an efficient and reliable method for continual training is provided.

The present disclosure is further related to a computer program including instructions for executing the steps of the above described method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

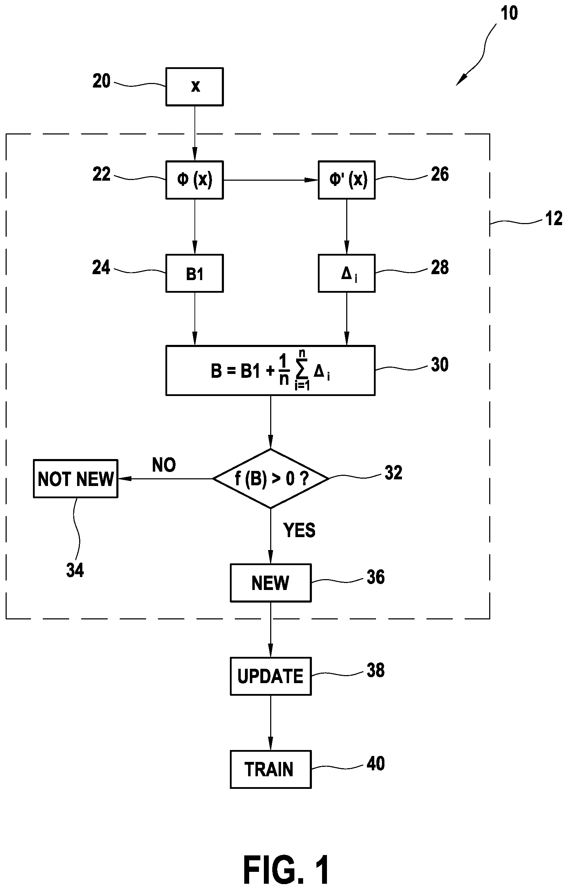

The invention and advantages thereof will be better understood upon reading the detailed description which follows, of embodiments given as non-limiting examples. This description refers to the appended drawings, wherein the sole figure, figure 1, is a diagram of a detection method and a training method according to an embodiment.

DETAILED DESCRIPTION OF EMBODIMENTS

A novelty detection method according to an embodiment is described with reference to Fig. 1. The detection method aims to detect, for a neural network model configured to classify input signals into a plurality of known output classes, whether an input signal belongs to a new output class. The new output class is an output class which does not belong to said plurality of known output classes, i.e. a class that has not been previously seen by the model.

The nature of the input signal and the classes depends on the desired application of the model. A few examples are given below:

- the input signal comprises an image (or a plurality of images, e.g. a video) and the output classes correspond to actions represented in the image;
- the input signal comprises an image (or a plurality of images, e.g. a video) and the output classes correspond to items and/or people represented in the image;

- the input signal comprises an audio track and the output classes correspond to speakers or instruments or the like heard in the audio track;
- the input signal comprises an electrical signal, e.g. over time, and the output classes correspond to different behaviors of the electrical signal;
- the input signal comprises a sensor measurement, e.g. over time or space, and the output classes correspond to different profiles of measurements.

For instance, in the automotive technologies, the neural network model may take images from a sensor (e.g. a camera) as an input, and classify the images into classes corresponding to the type(s) of items detected on the image, e.g. another car, a bicycle, a pedestrian, an obstacle, traffic lights, etc., and/or into classes corresponding to the type of situation, e.g. a safe situation, a care-deserving situation and a dangerous situation.

More generally, given an input signal $x$, a neural network model configured to classify the input signal $x$ into a plurality of known output classes $y_1,...,y_k$ may be represented as $\{\Phi,\theta\}$, where $\Phi$ is a feature extractor model and $\theta$ is a classification model. Thus, the neural network model is a combination of the feature extractor model $\Phi$ and the classification model $\theta$. The neural network model may comprise other pretreatment or post-treatment steps, such as a softmax function or the like. For instance, a post-treatment step may estimate the probability of the input signal to belong to one of the known classes, e.g. through a softmax function.

The feature extractor model is configured to extract features from the input signal, i.e. another representation of the data included in the input signal, in order to enable classification by the classification model. In particular, the output of the feature extractor model $\Phi$ is the so-called feature vector $\Phi(x)$ corresponding to the input signal $x$. In the following, it is assumed that the dimensionality of the feature vector $\Phi(x)$ is $p$. The feature extractor model $\Phi$ does not require any special format or hypothesis and may be as complex as desired by the skilled person.

The classification model may have no bias term in a last layer thereof. The classification model may thus be represented by a matrix, i.e. $\theta \in \mathbb{R}^{k \times p}$, where $k$ is the number of known output classes. For instance, the classification model may be a fully-connected final classification layer. The classification model may be linear. In the following, the $i$-th column of $\theta$ is denoted as $\theta_i$.

Thus, the neural network model output before the softmax is $\Phi(x)\theta^T$ and, for example, the predicted class $y_c$ for the input signal $x$ satisfies $c = \arg\max_i(\Phi(x) \cdot \theta_i) = \arg\max_i(\|\Phi(x)\|\|\theta_i\|\cos \alpha_i)$, where $\alpha_i$ is the angle between $\Phi(x)$ and $\theta_i$.

The norm of an extracted feature $\Phi(x)$ and the cosine of the angle between $\Phi(x)$ and the predicted class $y_c$, i.e. the most similar output class, are data-dependent terms (i.e. dependent on the input signal x), and represent the scalar projection of $\Phi(x)$ in the direction of $\theta_c$.

As illustrated in Fig. 1, a computer-implemented detection method 12 for detecting whether an input signal $x$ belongs to a new output class comprises a step 22 of computing the feature vector $\Phi(x)$ of the input signal $x$ with the neural network model.

The detection method 12 further comprises a step 24 of calculating a score based on respective similarities between said feature vector and respective prototypes of all the known output classes of the neural network model. That is, the detection method calculates the similarities between the feature vector $\Phi(x)$ and each of the output class prototypes, and then calculates a score based on all these similarities.

For instance, the score may comprise a weighted sum of said similarities, i.e. a weighted sum of the similarities of the extracted feature vector to the class prototypes.

In this case, $\theta_i$, which is the i-th column of the classification matrix $\theta$ may be taken as the prototype of known output class i. Thus, the classification matrix $\theta$ may also be seen as a prototype matrix, as every column thereof gives the prototype of one of the known output classes.

In an embodiment, the score B comprises a first scalar score B1 calculated as $B1 = \Phi^*(x).z$, where $\Phi^*(x)$ is the normalized feature vector and $z = p_x \theta^*$, with $p_x$ being an estimated class probability vector defined as

$$p_x = [p_x^1, p_x^2, ..., p_x^k] \text{ and } p_x^i = \frac{e^{\Phi(x).\theta_i}}{\Sigma_j e^{\Phi(x).\theta_j}},$$

wherein $\theta^*$ is the normalized prototype matrix. In other words, B1 is a weighted sum of the similarities of the extracted feature vector to the class prototypes, wherein the sum is weighted by the known output class probabilities.

In this example, the greater $\|\Phi(x)\|\|\theta_i\| \cos \alpha_i$, the more likely it is for class $y_i$ to be the predicted class for the input signal $x$. Therefore, when the vectors are normalized for the sake of comparison, such as in B1, $\cos \alpha_i$ is a measure of the similarity between the feature vector $\Phi(x)$ and the prototype of class $y_i$, $\theta_i$. More generally, in this embodiment, the similarity is estimated based on an angle between two vectors, here between the feature vector and each one of the prototypes. However, other measures of similarity may be envisaged, e.g. the inverse of the Euclidian distance between two vectors.

The score B may be equal to B1. Alternatively, the score B may be calculated based on B1 and other terms, as detailed hereinafter.

Specifically, the detection method may further exploit the features-to-prototypes similarities, here by a step 26 of calculating an updated feature vector $\Phi'(x)$ by applying a perturbation to the feature vector $\Phi(x)$.

As explained before, the idea of the perturbation is to assess the reliability of the prediction of the predicted known output class $y_c$ for the input signal $x$. Let $y_{c'}$ be another one of the known output classes. In an example, the perturbation corresponds to a gradient, with respect to the feature vector $\Phi(x)$, of a loss function of the neural network model given the other one of the known output classes as a label. That is, the neural network model has a loss function $l$ which is learned during the training of the neural network model and which is optimized at the time of deployment to determine the probabilities that an input signal belongs to a class. Then, the perturbation calculated with respect to class $y_{c'}$ is $g_{c'} = \nabla_{\Phi(x)} l(\Phi(x), y_{c'})$. The updated feature vector $\Phi'(x)$ may be calculated as $\Phi'(x) = \Phi(x) - g_{c'}$.

The known output class chosen to calculate the perturbation may be any one of the known output class. However, in an embodiment, $c'$ is chosen by identifying, as the other one of the known output classes $y_{c'}$, at least one closest output class to the feature vector other than the predicted known output class $y_c$. More simply, if the $c$-th class is the closest known output class (hence the predicted class), the $c'$-th class may be the second closest known output class, the third closest known output class, etc. As will be detailed below, a plurality of known output classes can be identified, each perturbation being calculated with respect to one of those output classes.

The detection method 12 further comprises a step 28 of estimating a difference $\Delta$ between a similarity of the updated feature vector $\Phi'(x)$ to a prototype $\theta_c$ of a predicted known output class for the feature vector and a similarity of the updated feature vector $\Phi'(x)$ to a prototype $\theta_{c'}$ of another one of the known output classes. If the similarity is estimated based on an angle between two vectors, as above, then $\Delta = \cos \alpha_c - \cos \alpha_{c'}$, where $\alpha_i$ is now the angle between $\Phi'(x)$ and $\theta_i$.

The idea underlying the calculation of the difference $\Delta$ is to see whether, when affected with a perturbation, the perturbed feature vector is still more similar to the predicted class $y_c$ than to another class $y_{c'}$. Especially, when the perturbation corresponds to a gradient of the cross-entropy loss given a candidate class $y_{c'}$ as a label, the difference $\Delta$ measures whether, in spite of a perturbation towards another class $y_{c'}$, the updated feature vector is still significantly more similar to the predicted known output class $y_c$ than to that other class $y_{c'}$.

Note that this difference $\Delta$ can be estimated for a plurality of different classes. In this case, step 28 comprises estimating a plurality of $n$ differences $\Delta_i = \cos \alpha_c - \cos \alpha_i$, with $i$ taking $n$ values chosen between 1 and $k$.

These steps result in defining a second scalar score B2, as $B2 = \frac{1}{n} \sum_{i=1}^{n} \Delta_i.$ That is, the second scalar score may be based on, e.g. comprise or be equal to, an average of the plurality of differences. If $n = 1$, then $B2 = \Delta$, and the second scalar score is based on said difference.

As shown in step 30, the score B is based on the first scalar score B1 as well as the second scalar score B2. In this embodiment, the score B is a mere sum of B1 and B2 (B=B1+B2). However, it could be a weighted sum or a score calculated otherwise from B1 and B2. Besides, steps 26 and 28 may not be carried out at all, in which case B2 and all the $\Delta_i$ are assumed to be equal to zero in step 30.

The detection method 12 further comprises a step 32 of determining that the input signal $x$ belongs to a new output class if the score B meets a predetermined criterion. The criterion may be embodied by a criterion function $f$, and it is determined that the input signal $x$ belongs to a new output class if $f(B) > 0$.

For instance, $f(B) = T - B$ where T is a threshold which may be predetermined. For instance, the threshold T may be determined based on training data, e.g. as the minimum score obtained for the training data. Alternatively or in addition, the threshold T may be determined based on a subset of input signals which are known not to belong to the known output classes, e.g. as the maximum score obtained for these input signals. Alternatively or in addition, noise input may be taken into account.

Thus, the criterion is met when the score B is less than the threshold T. In the above described embodiment, B being less than a threshold means that the feature vector has little similarity with any of the output class prototypes, which is measured by B1, and that the feature vector $\Phi(x)$ is not much more similar to the predicted class than to at least one other (possible closest) known output class, which is measured by B2. In these circumstances, it is highly likely that the input signal $x$ does not belong to any class of the plurality of known output classes, but belongs to an unseen class, i.e. a new output class.

In such case, the method determines that the input signal belongs to a new output class (step 36). Otherwise, the method determines that the input signal belongs to one of the known output classes (step 34).

The detection method 12 may be used in the context of continual training. Thus, Fig. 1 further illustrates a computer-implemented continual training method 10 for a neural network model configured to classify input signals into a plurality of known output classes. The training method 10 comprises a step 20 of providing an input signal $x$ to the neural network model, e.g. the above-described neural network model.

The training method further comprises detecting, by the detection method 12, whether the input signal $x$ belongs to a new output class for the neural network model.

If so, the training method comprises a step 38 of updating the neural network model to include the new output class in the plurality of known output classes. In the above example, the new output class would be a $(k + 1)$-th output class of the neural network model. For instance, the classification model $\theta$ may be updated to include a $(k + 1)$-th column. In an example, an in-vehicle neural network model may have been trained to classify input signals (e.g. images or parts thereof coming from an onboard sensor) into pedestrians and cars. When an image of a bicycle is given as an input signal to the model, it is desired that this image be identified as not belonging to any of the known classes, e.g. that a bicycle is neither a pedestrian nor a car but belongs to a new category (hence a new output class), so that the driving system can control the vehicle appropriately. More generally, the driving system may be configured to control the vehicle based on the detected known output class for a given input signal, or based on the input signal belonging to a new output class. The improvements brought by the above-described detection method therefore improve the adaptability, the driving accuracy and the safety of the vehicle.

After updating, the training method comprises a step 40 of training the neural network model on the input signal as an annotated input corresponding to the new output class. That is, the input signal $x$ has been annotated as corresponding to the new $(k + 1)$-th output class, and this annotated input signal is given as training data to the neural network model. The training may be performed on at least one new class to minimize the loss of the newly annotated data. Note that in general, retraining the model to take into account new annotated data does not require the training data of the previous learning stages, since the knowledge of this previous training data is already encompassed in the neural network model, e.g. in the prototypes. To prevent deteriorating the performance on the previously known classes, a dedicated continual learning method can be used (e.g., regularization methods) or a subset of previous class training data are reused in the new training stage of the at least one new output class. When the subset of previous training data (previous input signals and their respective annotated output classes) is reused, the training aims at minimizing the loss of these input signals.

An example is now described in order to evaluate the detection method 12. The detection method 12 was evaluated on TinyImageNet Sequence, which is a subset of 200 classes from ImageNet (*Stanford. Tiny ImageNet Challenge, CS231N Course),* rescaled to size 64×64 with 500 samples per class. Each stage represents a learning of a random set of 20 classes composing 10 stages. Here, all training stage data belong to one dataset in which no data collection artifacts or domain shift can be leveraged in the detection.

In this evaluation, training data of each stage is learnt offline with multiple epochs. In the context of image classification, both multi-head and shared-head settings are studied.

In multi-head setting, data of each learning stage is learnt with a separate output layer (head). It is largely studied and it is less prone to interference between tasks as the last output layer is not shared among the learned tasks. However, knowledge of the task identity is required at test time to forward the test sample to the corresponding output layer. In order to limit forgetting, the prediction model (neural network model) is trained with a continual learning (CL) method. Two well established methods from two different families are used: Learning without Forgetting (LwF), *from Zhizhong Li and Derek Hoiem. Learning without forgetting. In European Conference on Computer Vision, pages 614-629. Springer, 2016.,* uses the predictions of the previous model M(t-1) given the new stage St data to transfer previous knowledge to the new model M(t) via a knowledge distillation loss. Memory Aware Synapses (MAS), from Rahaf Aljundi, Francesca Babiloni, Mohamed Elhoseiny, Marcus Rohrbach, and Tinne Tuytelaars. Memory aware synapses: Learning what (not) to forget. In European Conference on Computer Vision, pages 144-161. Springer, 2018., estimates an importance weight of each model parameter with respect to the previous learning stages. An L2 regularization term is applied to penalize changes on parameters deemed important for previous stages. These methods are lightweight, require no retention of data from previous tasks and are well studied in various CL scenarios. A fine-tuning baseline that does not make use of any form of continual learning is also evaluated, and referred to as FineTune. Note that multi-head setting requires at test time a "task oracle" to forward the test data to the corresponding head.

In shared-head setting, the last output layer is shared among categories learned at the different stages. This is a more realistic setting, however, to prevent suffering from severe forgetting of previous tasks, most approaches rely on deploying a replay buffer of a subset of previously seen samples, usually referred to as Experience Replay (ER). A fixed buffer of different sizes corresponding to 10 samples per class, 25 samples per class and 50 samples per class is considered.

The architecture is based on two different backbones, namely ResNet and VGG for TinyImageNet Seq.

The training details are as follows: for CL, early stopping on a validation set was used at each learning stage. Following Seyed Iman Mirzadeh, Mehrdad Farajtabar, Razvan Pascanu, and Hassan Ghasemzadeh. Understanding the role of training regimes in continual learning. arXiv preprint arXiv.-2006.06958, 2020., an appropriate choice of regularization and hyperparameters could lead to a stable SGD (Stochastic gradient descent) training resulting in smaller degrees of forgetting. Hence, SGD optimizer is used, where dropout, learning rate schedule, learning rate, and batch size were treated as hyper-parameters. CL hyper-parameters that achieve the best possible learning performance are chosen in order to reduce any possible effect of negative training artifacts on the novelty detection (ND) performance.

The following metrics are considered to report the results.

AUC: Area Under the receiver operating Characteristic curve *(Dan Hendrycks and Kevin Gimpel. A baseline for detecting misclassified and out-of-distribution examples in neural networks. arXiv preprint arXiv:1610.02136, 2016).* It can be interpreted as the probability that an In sample (i.e. an input signal that belongs to one of the known output classes) has a greater score than an Out sample (i.e. an input signal that does not belong to any one of the known output classes). This metric is varied as follows: 1) Combined AUC (C.AUC), which measures the ND performance for all In samples regardless of the activated head, 2) the most recent stage AUC (R.AUC), only concerned with In samples of the latest stage, and 3) the previous stages AUC (P.AUC) where In represents only data relevant to previous stages. For each novelty detection method, the hyperparameters are tuned based on an out of distribution dataset, namely CIFAR-10.

Detection Error (DER): The minimum detection error *(Shiyu Liang, Yixuan Li, and R. Srikant Enhancing the reliability of out-of-distribution image detection in neural networks. In International Conference on Learning Representations, 2018).*

Table 1 compares the novelty detection performance obtained with the different methods and different metrics. Softmax refers to a method in which the output probability of the predicted class after a softmax layer is used as a score to determine whether the input signal belongs to any one of the known output classes. B1 refers to the above-described detection method 12, without steps 26 and 28. B2 refers to the above-described detection method 12 with steps 26 and 28. In the metrics, "m" refers to the mean of each measure percentage and the arrows indicate in which direction the performance should be measured (i.e. an arrow upwards indicates that the greater the result, the better, whereas an arrow downwards indicates that the lesser the result, the better).

TABLE 1

| Setting | Method | m.P.AUC↑ | m.R.AUC↑ | mC.AUC↑ | mAUC↑ | m.DER↓ |
|---|---|---|---|---|---|---|
| Multi-head | *Softmax* | 66.1 | 81.6 | 74.1 | 71.0 | 31.7 |
| | *B1* | 67.7 | 83.0 | 75.3 | 72.5 | 30.7 |
| FineTune | *B2* | 68.1 | 83.2 | 75.8 | 72.8 | 30.4 |
| Multi-head | *Softmax* | 78.1 | 76.7 | 76.5 | 78.2 | 29.7 |
| | *B1* | 78.4 | 77.1 | 74.1 | 78.5 | 31.7 |
| MAS | *B2* | 79.1 | 77.7 | 75.8 | 79.2 | 30.5 |
| Multi-head | *Softmax* | 79.7 | 80.5 | 76.9 | 80.3 | 29.5 |
| | *B1* | 80.3 | 82.2 | 75.8 | 81.1 | 29.2 |
| LWF | *B2* | 80.8 | 82.4 | 78.0 | 81.6 | 28.2 |
| Shared-head | *Softmax* | 76.2 | 71.1 | - | 75.0 | 31.0 |
| | *B1* | 75.9 | 71.2 | - | 74.8 | 30.8 |
| ER-10s | *B2* | 77.1 | 72.5 | - | 76.0 | 30.0 |
| Shared-head | *Softmax* | 78.4 | 70.5 | - | 76.6 | 29.8 |
| | *B1* | 78.7 | 69.7 | - | 76.4 | 29.4 |
| ER-25s | *B2* | 79.8 | 71.4 | - | 77.7 | 28.6 |
| Shared-head | *Softmax* | 80.1 | 69.8 | - | 77.8 | 28.4 |
| | *B1* | 79.1 | 66.1 | - | 76.1 | 29.2 |
| ER-50s | *B2* | 80.7 | 68.9 | - | 78.0 | 27.8 |

As can be seen from Table 1, the embodiment of the detection method 12 shows better performance than Softmax in the different settings, especially in the case of severe forgetting with FineTune. Specifically, B1 provides often better and at least comparable performance with Softmax, while B2 almost always outperforms Softmax.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented method (12) for detecting, for a neural network model configured to classify input signals into a plurality of known output classes, whether an input signal *(x)* belongs to a new output class, the new output class being an output class which does not belong to said plurality of known output classes, the method comprising:

   - computing (22) a feature vector ($\Phi(x)$) of the input signal with the neural network model;
   - calculating (24, 30) a score (B) based on respective similarities between said feature vector ($\Phi(x)$) and respective prototypes of all the known output classes of the neural network model;
   - determining (32) that the input signal belongs to a new output class if the score (B) meets a predetermined criterion.

2. The method of claim 1, wherein the score (B) comprises a weighted sum of the similarities.

3. The method of claim 1 or 2, wherein the score comprises a scalar score calculated as $\Phi^*(x).z$, where *x* is the input signal, $\Phi^*(x)$ is the normalized feature vector and $z = p_x\theta^*$, with $p_x$ being an estimated class probability vector defined

   as $p_x = [p_x^1, p_x^2, ..., p_x^k]$ and $p_x^i = \dfrac{e^{\Phi(x).\theta_i}}{\Sigma_j e^{\Phi(x).\theta_j}}$, wherein *k* is the number of known output classes, $\theta_i$ is the

   prototype of known output class *i* and the *i*-th column of a prototype matrix $\theta$, and $\theta^*$ is the normalized prototype matrix.

4. The method of any one of claims 1 to 3, wherein the neural network model is a combination of a feature extractor model ($\Phi$) and a classification model ($\theta$), wherein the feature vector ($\Phi(x)$) is computed as an output of the feature extractor with the input signal as an input.

5. The method of claim 4, wherein the classification model ($\theta$) is linear.

6. The method of claim 4 or 5, wherein the classification model ($\theta$) has no bias term in a last layer thereof.

7. The method of any one of claims 1 to 6, further comprising calculating (26) an updated feature vector ($\Phi'(x)$) by applying a perturbation to the feature vector ($\Phi(x)$), and estimating (28) a difference between a similarity of the updated feature vector ($\Phi'(x)$) to a prototype of a predicted known output class for the feature vector and a similarity of the updated feature vector ($\Phi'(x)$) to a prototype of another one of the known output classes, wherein the score (B) is further based on said difference.

8. The method of claim 7, further comprising identifying, as the other one of the known output classes, at least one closest output class to the feature vector ($\Phi(x)$) other than the predicted known output class.

9. The method of claim 7 or 8, wherein said perturbation corresponds to a gradient, with respect to the feature vector ($\Phi(x)$), of a loss function of the neural network model given the other one of the known output classes as a label.

10. The method of any one of claims 7 to 9, comprising estimating (28) a plurality of said differences, wherein the score (B) is based on an average of said plurality of differences.

11. The method of any one of claims 1 to 10, wherein the similarity is estimated based on an angle between two vectors.

12. The method of any one of claims 1 to 11, wherein the input signal (x) comprises an image and the plurality of known output classes corresponds to a plurality of items and/or actions and/or people to be detected in the image, respectively.

13. A computer-implemented continual training method (10) for a neural network model configured to classify input signals into a plurality of known output classes, the method comprising:

   - providing (20) an input signal *(x)* to the neural network model;
   - detecting, by the method (12) of any one of claims 1 to 12, whether the input signal belongs to a new output class for the neural network model;
   - if the input signal belongs to a new output class, updating (38) the neural network model to include the new output class in the plurality of known output classes, and training (40) the neural network model on the input signal as an annotated input corresponding to the new output class.

14. A computer program including instructions for executing the steps of the method of any one of claims 1 to 13 when said program is executed by a computer.

15. A recording medium readable by a computer and having recorded thereon a computer program including instructions for executing the steps of the method of any one of claims 1 to 13.

**FIG. 1**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIMIN YANG* ET AL: "CADE: Detecting and Explaining Concept Drift Samples for Security Applications", USENIX, USENIX, THE ADVANCED COMPUTING SYSTEMS ASSOCIATION , 11 November 2020 (2020-11-11), pages 1-18, XP061053332, Retrieved from the Internet: URL:http://www.usenix.org/system/files/sec21summer_yang.pdf [retrieved on 2020-11-11] * page 1 – page 18 * ----- | 1-15 | INV. G06N3/04 G06N3/08 G06N20/00 |
| X | JAIN AADITYA ET AL: "Clustering of Text Streams via Facility Location and Spherical K-means", 2018 SECOND INTERNATIONAL CONFERENCE ON ELECTRONICS, COMMUNICATION AND AEROSPACE TECHNOLOGY (ICECA), IEEE, 29 March 2018 (2018-03-29), pages 1209-1213, XP033410277, DOI: 10.1109/ICECA.2018.8474757 [retrieved on 2018-09-26] * page 1209 – page 1213 * ----- | 1-15 | TECHNICAL FIELDS SEARCHED (IPC) G06N |

The present search report has been drawn up for all claims

| Place of search | Date of completion of the search | Examiner |
|---|---|---|
| Munich | 21 January 2022 | Ernst, Jens |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Learning without forgetting. **ZHIZHONG LI ; DEREK HOIEM.** European Conference on Computer Vision. Springer, 2016, 614-629
- Memory aware synapses: Learning what (not) to forget. **RAHAF ALJUNDI ; FRANCESCA BABILONI ; MOHAMED ELHOSEINY ; MARCUS ROHRBACH ; TINNE TUYTELAARS.** European Conference on Computer Vision. Springer, 2018, 144-161
- **SEYED IMAN MIRZADEH ; MEHRDAD FARAJTABAR ; RAZVAN PASCANU ; HASSAN GHASEMZADEH.** Understanding the role of training regimes in continual learning. *arXiv preprint arX-iv.-2006.06958,* 2020

- **DAN HENDRYCKS ; KEVIN GIMPEL.** A baseline for detecting misclassified and out-of-distribution examples in neural networks. *arXiv preprint arX-iv:1610.02136,* 2016
- **SHIYU LIANG ; YIXUAN LI ; R. SRIKANT.** Enhancing the reliability of out-of-distribution image detection in neural networks. *International Conference on Learning Representations,* 2018